# EUROPÄISCHE PATENTSCHRIFT

(11) **EP 2 226 106 B1**
(45) Veröffentlichungstag und Bekanntmachung des Hinweises auf die Patenterteilung: **02.09.2015**
(21) Anmeldenummer: 09002449.8
(22) Anmeldetag: 20.02.2009
(51) Int. Cl.: B01D 17/02, B01D 17/04, E03F 3/00, E03F 5/16, E03F 3/04

(54) **Leichtflüssigkeitsabscheidevorrichtung**
Light fluid separation device
Dispositif de séparation de liquides légers

(43) Veröffentlichungstag der Anmeldung: 08.09.2010
(60) Teilanmeldung: 13161559.3
(73) Patentinhaber: FRÄNKISCHE ROHRWERKE Gebr. Kirchner GmbH & Co. KG, 97486 Königsberg (DE)
(72) Erfinder: Adams, Dietmar, 01328 Dresden (DE); Kriese, Jens, 14621 Schönwalde (DE); Wilhelm, Jörg, 72070 Tübingen (DE); Czesch, Christian, 93055 Regensburg (DE); Haase, Reinhard, 32689 Kalletal (DE)
(74) Vertreter: Weickmann & Weickmann

(56) Entgegenhaltungen:
- EP-A1- 0 615 776
- EP-A1- 1 559 465
- WO-A-2004/016907
- WO-A-2005/115583
- DE-A1- 19 916 964
- US-A1- 2006 006 125

## Beschreibung

Die Erfindung betrifft eine Regenwasserbewirtschaftungsanlage mit einer Leichtflüssigkeitsabscheidevorrichtung zum zumindest teilweisen Entfernen von Leichtflüssigkeit, beispielsweise Öl, Benzin oder dergleichen, aus Abwasser.

Die Bewirtschaftung von Regenwasser umfasst im Wesentlichen die Nutzung, Rückhaltung, Behandlung und Versickerung von Wasser, das in Form von Regen auf befestigten Flächen niedergeht. Durch diese Regenwasserbewirtschaftung soll, soweit möglich, die direkte Einleitung des Regenwassers in das Kanalnetz vermieden werden. Dabei gewinnt die Behandlung des anfallenden Regenwassers zunehmend an Bedeutung. Beispielsweise werden bei der Regenwasserversickerung zunehmend höhere Anforderungen an die Wasserqualität bzw. die Freiheit des zu beseitigenden Wasser von Schadstoffen gestellt. So enthält beispielsweise Regenwasser von Verkehrs-, Parkplatz- oder Hofflächen eine grössere Menge an Verunreinigungen, insbesondere auch an Ölen oder Benzin- bzw. Dieselkraftstoffen. Daher muss das auf diesen Flächen anfallende Regenwasser über eine belebte Bodenzone oberirdisch versickert werden. Da hierfür teure Grundstücksflächen zur Verfügung gestellt werden müssen, besteht daher Bedarf an einer unterirdischen Vorreinigung mit einer äquivalenten Reinigungsleistung.

Da bereits sehr geringe Mengen an Mineralölen bzw. Mineralöl-Kohlenwasserstoffen (MKW), d.h. Mengen in der Grössenordnung von nur wenigen Tropfen, in der Lage sind, sehr grosse Mengen an Wasser zu verseuchen, d.h. Mengen in der Grössenordnung von mehreren 1.000 Litern, ist es in Europa bereits gesetzlich vorgeschrieben, besonders gefährdete Flächen, wie zum Beispiel Tankstellen oder Stellflächen für Schadfahrzeuge, mit Leichtflüssigkeitsabscheidern auszustatten.

Die herkömmlich eingesetzten Leichtflüssigkeitsabscheidevorrichtungen arbeiten dabei vorwiegend nach einem quasi-stationären Prinzip. D.h. Abwasser wird in einen Behälter eingeleitet, welcher durch seine Größe ein Beruhigungsvolumen darstellt, so dass die Strömung des Abwassers zwischen einem Abwassereinlass und einem Abwasserauslass in dem Behälter annähernd zum Erliegen kommt. Hierdurch hat die Leichtflüssigkeit ausreichend Zeit, um aufgrund ihrer geringeren spezifischen Dichte an die Oberfläche des Abwassers aufzusteigen, von wo es entfernt werden kann, während das von der Leichtflüssigkeit befreite Abwasser jenseits einer Tauchwand aus dem Behälter ausgeleitet wird. Die Effizienz einer solchen Vorrichtung kann dadurch erhöht werden, dass zwischen dem Abwassereinlass und dem Abwasserauslass im Behälter beispielsweise ein engmaschiges Netz mit dreidimensionaler Struktur und großer Oberfläche angeordnet ist, durch welches das Abwasser langsam hindurchströmt. An der Oberfläche eines solchen Netzes lagern sich auch diejenigen im Abwasser befindlichen Leichtflüssigkeitspartikel an, die aufgrund ihres zu geringem Durchmessers einen zu geringen Auftrieb haben, um zur Oberfläche aufsteigen zu können. An dem Netz fließen diese sehr kleinen Leichtflüssigkeitspartikel dann durch den sogenannten Koaleszenzeffekt zusammen und bilden größere Leichtflüssigkeitstropfen, die einen höheren Auftrieb erfahren und daher zur Oberfläche des Abwassers aufsteigen können.

Nachteilig bei derart quais-stationär arbeitenden Leichtflüssigkeitsabscheidevorrichtungen ist jedoch, dass sehr große Behälter benötigt werden, um ein ausreichend großes Beruhigungsvolumen bereitzustellen. Da bei der Bemessung der Behältergröße zudem von einem Starkregenereignis auszugehen ist, führt dies pro Flächeneinheit zu sehr großen Behältern, bzw. sind die anschließbaren Flächen für einen Behälter vorgegebener Größe verhältnismäßig klein. Die Fertigung und Installation derartiger Leichtflüssigkeitsabscheidevorrichtungen ist daher sehr kostspielig, was dazu führt, dass ausschließlich die gesetzlich vorgeschriebenen besonders gefährdeten Flächen mit derartigen Vorrichtungen ausgestattet werden. Bei Parkplätzen oder Strassen hingegen wird das anfallende Regenwasser aus Kostengründen in der Regel nicht von Leichtflüssigkeitsbestandteilen gereinigt, sondern das anfal-, lende Regenwasser wird vielmehr direkt in die Kanalisation eingeleitet oder in den Untergrund versickert. Gerade bei anschliessender Versickerung geht daher von diesen Flächen eine erhöhte Gefahr einer Grundwasserverunreinigung aus, welche Vorreinigungsmassnahmen erforderlich macht.

Aus der EP 0 960 642 A1 ist eine Leichtflüssigkeitsabscheidevorrichtung bekannt, welche zur Entfernung von Leichtflüssigkeitsanteilen aus Abwasser aus Gründen der Platzersparnis auf die Verwendung eines Beruhigungsvolumens verzichtet. Bei diesem Verfahren wird das mit Leichtflüssigkeit verunreinigte Abwasser durch eine spiralenähnliche Form geleitet, wobei das gegenüber der Leichtflüssigkeit schwerere Wasser aufgrund der Fliehkraft nach aussen in der Spirale gedrückt wird, so dass sich die Leichtflüssigkeit im Inneren der Spirale ansammelt und von dort abgesogen werden kann. Diese Leichtflüssigkeitsabscheidevorrichtung ist jedoch technisch relativ kompliziert und daher kostenintensiv. Daher eignet sie sich ebenfalls nicht zum grossflächigen Einsatz bei der Reinigung von Regenwasser, das auf versiegelte Flächen, wie zum Beispiel Strassen oder Parkplätze, niedergegangen ist.

Es ist daher Aufgabe der vorliegenden Erfindung, eine Regenwasserbewirtschaftungsanlage mit einer Leichtflüssigkeitsabscheidevorrichtung bereitzustellen, die einfach im Aufbau und daher, kostengünstig in der Produktion, der Installation bzw. auch im Betrieb ist, so dass sie sich für den grossflächigen Einsatz eignet.

Diese Aufgabe wird durch eine Regenwasserbewirtschaftungsanlage mit einer Leichtflüssigkeitsabscheidevorrichtung zum zumindest teilweisen Entfernen von Leichtflüssigkeit, beispielsweise Öl, Benzin oder dergleichen, aus Abwasser gelöst, wobei die Leichtflüssigkeitsabscheidevorrichtung wenigstens ein Leichtflüssigkeitsabscheiderohr umfasst, welches wenigstens einen Strömungsraum mit wenigstens einer Einlassöffnung und wenigstens einer Auslassöffnung aufweist, wobei weiter das Abwasser durch die wenigstens eine Einlassöffnung in den wenigstens einen Strömungsraum eintritt und nach Durchströmen des wenigstens einen Strömungsraums durch die wenigstens eine Ausgangsöffnung wieder aus dem wenigstens einen Strömungsraum austritt, wobei weiter zumindest ein Teil der Leichtflüssigkeit während des Durchströmens des wenigstens einen Strömungsraums bedingt durch die gegenüber dem restlichen Abwasser geringere spezifische Dichte der Leichtflüssigkeit nach oben aufsteigt, und wobei der wenigstens eine Strömungsraum über wenigstens eine an seiner Decke vorgesehene Durchtrittsöffnung mit wenigstens einem Leichtflüssigkeitsabscheideraum verbunden ist, in welchem sich in dem wenigstens einen Strömungsraum aufsteigende und durch die wenigstens eine Durchtrittsöffnung hindurchtretende Leichtflüssigkeit abscheidet.

Hierbei sind wenigstens ein Teil des Strömungsraums und wenigstens ein Teil des Leichtflüssigkeitsabscheideraums einstückig ausgebildet. Die Leichtflüssigkeitsabscheidevorrichtung ist von einem herkömmlichen Rohr gebildet, in welches eine den Strömungsraum und den Leichtflüssigkeitsabscheideraum voneinander trennende und die wenigstens eine Durchtrittsöffnung aufweisende Wandung eingebracht ist, so dass die äußeren Begrenzungswandungen von Strömungsraum und Leichtflüssigkeitsabscheideraum einstückig ausgebildet sind. Außerdem ist das wenigstens eine Leichtflüssigkeitsabscheiderohr bezogen auf die Strömungsrichtung des Abwassers mit Gegengefälle angeordnet.

Zwar kommt es zugegebenermassen auch in herkömmlichen Abwasserrohren dann, wenn das Abwasser Leichtflüssigkeit mit sich führt, zum dichtebedingten Aufsteigen zumindest eines Teils dieser Leichtflüssigkeit nach oben in Richtung Scheitel des Abwasserrohres. Diese aufgestiegene Leichtflüssigkeit wird jedoch nicht zurückgehalten und durch die Strömung des Abwassers mitgerissen und verlässt mit dieser die Auslassöffnung des Abwasserrohres. Von derartigen herkömmlichen Abwasserrohren unterscheidet sich das Leichtflüssigkeitsabscheiderohr der erfindungsgemässen Leichtflüssigkeitsabscheidevorrichtung vor allem dadurch, dass die im Rohr nach oben aufgestiegene Leichtflüssigkeit nicht mit der Strömung des Abwassers aus der wenigstens einen Austrittsöffnung wieder aus dem Leichtflüssigkeitsabscheiderohr austritt, sondern dass sich die Leichtflüssigkeit in einem vom Strömungsraum separaten, strömungsberuhigten Leichtflüssigkeitsabscheideraum ansammelt und dort zurückgehalten wird. Dabei ist es erfindungsgemäss von grosser Bedeutung, dass der Leichtflüssigkeitsabscheideraum der erfin dungsgemässen Leichtflüssigkeitsabscheidevorrichtung nicht vom Abwasser durchströmt wird, sondern dass er bezüglich der Strömung des Abwassers einen Totraum bildet.

Im Gegensatz zu den bekannten quasi-stationär arbeitenden Leichtflüssigkeitsabscheidevorrichtungen kommt die erfindungsgemässe Leichtflüssigkeitsabscheidevorrichtung ohne die Bereitstellung eines grossen Beruhigungsvolumens aus, so dass die Vorrichtung sehr platzsparend und kostengünstig installiert werden kann. Insbesondere ist es möglich, ohnehin benötigte Abwasserrohre durch Leichtflüssigkeitsabscheiderohre der erfindungsgemässen Leichtflüssigkeitsabscheidevorrichtung zu ersetzen. Der sich im Abwasser befindlichen Leichtflüssigkeit steht die gesamte Zeit, die das Abwasser benötigt, um von der wenigstens einen Eintrittsöffnung durch das Rohr bis zur wenigstens einen Auslassöffnung zu strömen, zur Verfügung, um nach oben zur Decke des Strömungsraums des Leichtflüssigkeitsabscheiderohrs aufzusteigen. Vorteilhaft gegenüber einer Vorrichtung, die mit einem als Beruhigungsvolumen dienenden grossen Behälter arbeitet, ist bei der erfindungsgemässen Leichtflüssigkeitsabscheidevorrichtung zudem, dass die maximale Wegstrecke, welche die Leichtflüssigkeit zurücklegen muss, um die Decke des Strömungsraums des Leichtflüssigkeitsabscheiderohrs zu erreichen, aufgrund der Rohrform relativ kurz ist (sie entspricht im Wesentlichen der Höhe des Strömungsraums). Somit ist auch die zum Aufsteigen benötigte Zeit relativ kurz, was höhere Strömungsgeschwindigkeiten im Strömungsraum ermöglicht.

Gegenüber der aus dem Stand der Technik bekannten Vorrichtung, welche mit einer spiralenähnlichen Form arbeitet, hat die erfindungsgemässe Leichtflüssigkeitsabscheidevorrichtung den Vorteil, dass sie konstruktiv sehr einfach ausgestaltet und somit entsprechend kostengünstig in der Herstellung und im Betrieb ist.

Um eine einfache Fertigung und Handhabung gewährleisten zu können, wird vorgeschlagen, dass das wenigstens eine Leichtflüssigkeitsabscheiderohr vorzugsweise im Wesentlichen geradlinig ausgebildet ist oder/und vorzugsweise einen im Wesentlichen kreisförmigen Querschnitt aufweist.

In Weiterbildung der Erfindung wird vorgeschlagen, dass die Leichtflüssigkeitsab scheidevorrichtung ferner eine Überlaufwand umfasst. Diese Überlaufwand kann dabei in Strömungsrichtung des Abwassers hinter der wenigstens einen Auslassöffnung des wenigstens einen Leichtflüssigkeitsabscheiderohrs angeordnet sein. Ferner kann die Überlaufwand eine Höhe aufweisen, die gross genug ist, um sicherzustellen, dass dann, wenn Abwasser die Leichtflüssigkeitsabscheidevorrichtung verlässt, der Abwasserpegel stets hoch genug ist, um die abgeschiedene Leichtflüssigkeit in dem wenigstens einem Leichtflüssigkeitsabscheideraum zurückhalten zu können. Für den Fall eines mit Gegengefälle angeordneten Leichtflüssigkeitsabscheiderohrs bedeutet dies, dass die Überlaufwand vorzugsweise in Strömungsrichtung hinter einem am höchsten gelegenen Durchtrittsabschnitt der Durchtrittsöffnung bzw. der Durchtrittsöffnungen und ferner vorzugsweise höher als dieser Durchtrittsabschnitt angeordnet sein sollte.

Grundsätzlich ist es möglich, dass wenigstens ein Strömungsraum und wenigstens ein Leichtflüssigkeitsabscheideraum durch eine einzige Durchtrittsöffnung miteinander verbunden sind, welche sich vorzugsweise über wenigstens 1 %, bevorzugter über wenigstens 25%, noch bevorzugter über wenigstens 50%, der Länge des Strömungsraums erstreckt.

Alternativ ist es jedoch auch möglich, dass wenigstens ein Strömungsraum und wenigstens ein Leichtflüssigkeitsabscheideraum durch eine Mehrzahl von, vorzugsweise in Strömungsrichtung aufeinander folgend angeordneter Durchtrittsöffnungen miteinander verbunden sind. Die Durchtrittsöffnungen können dabei länglich ausgebildet sein. Es ist aber auch eine Gitterstrukturanordnung der Durchtrittsöffnungen denkbar, beispielsweise in Form eines Wabengitters.

Für den Fall des Vorhandenseins mehrerer Durchtrittsöffnungen kann ein den Durchtrittsöffnungen benachbarter Abschnitt wenigstes eines Strömungsraums mit wenigstens einem Quersteg versehen sein, welcher bezüglich der Strömungsrichtung beispielsweise im Wesentlichen orthogonal oder schräg angeordnet ist. Derartige Gitter- oder Lamellenstrukturen der Durchtrittsöffnungen können dazu beitragen, den wenigstens einen Strömungsraum strömungstechnisch effizient von dem wenigstens einen Leichtflüssigkeitsabscheideraum zu trennen, was die Abscheidung der Leichtflüssigkeit begünstigt. Sie sind insbesondere vorteilhaft, um Verwirbelungen im Totraum durch die Strömung, insbesondere bei Starkregenereignissen, vermeiden zu können. Vorteilhafterweise kann die Höhe der Gitter- oder Lamellenstege vorzugsweise größer sein als ihre Breite.

In Weiterbildung der Erfindung wird vorgeschlagen, dass der wenigstens eine Leichtflüssigkeitsabscheideraum, vorzugsweise an seiner höchst gelegenen Stelle, mit einer Entlüftungsvorrichtung verbunden ist. Hierdurch kann sichergestellt werden, dass sich bei der Inbetriebnahme der Leichtflüssigkeitsabscheidevorrichtung oder nach jeder Wartung, die mit einer Entleerung der Leichtflüssigkeitsabscheidevorrichtung einhergeht, der Leichtflüssigkeitsabscheideraum wieder vollständig mit Wasser füllt. Dies gewährleistet, dass das von der Leichtflüssigkeitsabscheidevorrichtung bereitgestellte Sammelvolumen effizient genutzt werden kann. Ferner kann durch die Entlüftungsvorrichtung sichergestellt werden, dass der Druck im Leichtflüssigkeitsabscheideraum im Wesentlichen dem äußeren Atmosphärendruck entspricht.

Um bei Bedarf die im Leichtflüssigkeitsabscheideraum abgeschiedene Leichtflüssigkeit entfernen zu können, wird vorgeschlagen, dass der wenigstens eine Leichtflüssigkeitsabscheideraum, vorzugsweise an seiner höchst gelegenen Stelle, mit einem Anschlusskanal zum Entfernen, beispielsweise durch Absaugen, der abgeschiedenen Leichtflüssigkeit aus dem Leichtflüssigkeitsabscheideraum verbunden sein kann. Hierzu können zum Beispiel Abschöpf- oder Absaugvorrichtungen, wie etwa eine Pumpe, verwendet werden, die entweder bei Bedarf in den Anschlusskanal eingeführt werden, oder die permanent dort installiert sind. Ferner empfiehlt es sich, in dem Leichtflüssigkeitsabscheideraum eine Sensorvorrichtung, zum Beispiel einen Schwimmer, vorzusehen, welche den Füllzustand des Leichtflüssigkeitsabscheideraums erfasst und gegebenenfalls, wenn ein kritischer Füllzustand erreicht wird, ein Warnsignal ausgibt, bzw. bei permanent installierter Abschöpf- oder Absaugvorrichtung, diese aktiviert.

Um Bauraum und auch Kosten zu sparen, ist es vorteilhaft, wenn die Entlüftungsvorrichtung und der Anschlusskanal zum Entfernen der abgeschiedenen Leichtflüssigkeit als eine Einheit ausgebildet sind. Zusätzlich oder alternativ kann zur Erleichterung der Wartung wenigstens ein Ende wenigstens eines Strömungsraums in einem im Wesentlichen vertikal verlaufenden Schacht enden.

Grundsätzlich ist es jedoch auch denkbar, die im Abscheideraum gesammelte Leichtflüssigkeit bei einer Wartung zusammen mit dem sich im Strömungsraum befindenden Abwasser von Seiten der Einlassöffnung des Leichtflüssigkeitsabscheiderohrs her abzusaugen. Insbesondere bei Kombination der Leichtflüssigkeitsabscheidevorrichtung mit einer Sedimentationsvorrichtung zum Abscheiden von Teilchen, deren spezifische Dichte grösser als die von Wasser ist, können auf diese Weise die Sedimente und die Leichtflüssigkeiten gleichzeitig abgepumpt und der weiteren Entsorgung zugeführt werden. Hierzu ist es vorteilhaft, wenn wenigstens ein Ende wenigstens eines Strömungsraums in einem im Wesentlichen vertikal verlaufenden Schacht endet.

Ferner können Leichtflüssigkeitsabscheideraum oder/und Strömungsraum aus Kunststoff gefertigt sein. Als Fertigungsverfahren kommt beispielsweise Extrusion in Betracht.

Um den Koaleszenzeffekt möglichst effektiv nutzen zu können, wird in Weiterbildung der Erfindung vorgeschlagen, dass in dem Strömungsraum, vorzugsweise der Auslassöffnung benachbart, wenigstens ein Koaleszenzeinsatz angeordnet ist, der vorzugsweise von im Wesentlichen dem gesamten Abwasser durchströmt wird. Dabei kann der wenigstens eine Koaleszenzeinsatz vorteilhafterweise über einen Wartungsschacht herausnehmbar und auswechselbar sein.

Grundsätzlich besteht die Möglichkeit, das Leichtflüssigkeitsabscheiderohr der erfindungsgemässen Leichtflüssigkeitsabscheidevorrichtung konstruktiv mit einem Sedimentationsrohr, wie es aus der DE 10 2004 008 960 A1 der Anmelderin bekannt ist, zu kombinieren. Hierdurch wird es möglich, das Abwasser nicht nur zumindest teilweise von Leichtflüssigkeitspartikeln, d.h. von Partikeln deren spezifische Dichte geringer als die von Wasser ist, sondern zeitgleich zumindest teilweise auch von Schwebteilchen, deren spezifische Dichte grösser als die von Wasser ist, zu reinigen, sofern solche Schwebteilchen im Abwasser vorhanden sind. Diese Schwebteilchen sinken zumindest teilweise beim Durchströmen des Abwassers durch den wenigstens einen Strömungsraum schwerkraftbedingt nach unten zum Boden des Strömungsraums.

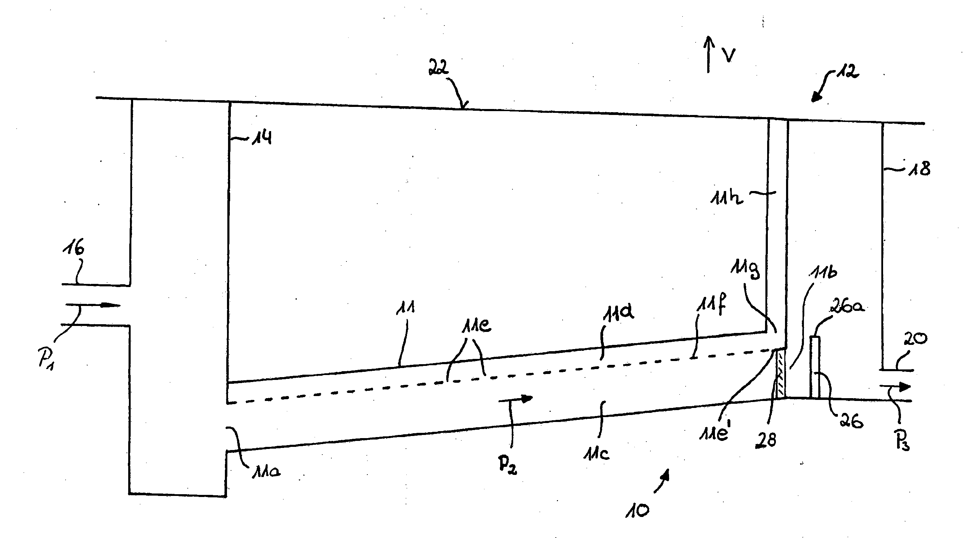

Die Erfindung wird im Folgenden an einem Ausführungsbeispiel anhand der beigefügten Zeichnung näher erläutert werden. Dabei stellt die einzige Figur eine schematische, geschnittene Seitenansicht einer erfindungsgemässen Leichtflüssigkeitsabscheidevorrichtung als Teil einer Regenwasserbewirtschaftungsanlage dar.

In der einzigen Figur ist eine erfindungsgemäße Leichtflüssigkeitsabscheidevorrichtung ganz allgemein mit 10 bezeichnet. Sie umfasst ein geradliniges, aus Kunststoff gefertigtes Leichtflüssigkeitsabscheiderohr 11 und ist Teil einer Regenwasserbewirtschaftungsanlage 12, welche ferner einen ersten Wartungsschacht 14 mit einem Zulauf 16 und einen zweiten Wartungsschacht 18 mit einem Ablauf 20 umfasst.

Die Leichtflüssigkeitsabscheidevorrichtung 10 umfasst ferner eine Überlaufwand 26, welche in Strömungsrichtung des Abwassers (Pfeil P₂) hinter einer Auslassöffnung 11b des Leichtflüssigkeitsabscheiderohrs 11 angeordnet ist und eine weiter unten noch näher zu erläuternde Mindesthöhe aufweist.

Durch den Zulauf 16 wird Regenwasser, das auf einer versiegelten Oberfläche 22, beispielsweise einer Straße, einem Parkplatz oder dergleichen, niedergegangen ist, in den im Wesentlichen vertikal verlaufenden ersten Wartungsschacht 14 eingeleitet (Pfeil P₁). Sehr grobe Leichtflüssigkeitspartikel, wie sie beispielsweise bei einer Havarie etwa einer Bremsleitung einer Hydraulikbremse oder anderen Fällen konzentrierten Austritts von Öl auftreten, scheiden sich bereits im Wartungsschacht 14 vom restlichen Abwasser ab, indem sie an die Oberfläche des Abwassers im Wartungsschacht 14 treiben und somit gar nicht erst in das Leichtflüssigkeitsabscheiderohr 11 hinein gelangen. Wird diese Leichtflüssigkeit allerdings nicht unmittelbar abgepumpt, so besteht die Möglichkeit, dass es bei einem Regenereignis mit dem Abwasser verwirbelt und in das Leichtflüssigkeitsabscheiderohr eingetragen wird.

Wie in der Figur dargestellt ist, ist das Leichtflüssigkeitsabscheiderohr 11 von seiner in der Figur linken, mit dem ersten Wartungsschacht 14 in Verbindung stehendem Ende mit der Einlassöffnung 11a zu seinem in der Figur rechten, mit dem zweiten Wartungsschacht 18 in Verbindung stehenden Ende mit der Auslassöffnung 11b hin ansteigend, das heißt in Strömungsrichtung P₂ des Abwassers mit Gegengefälle, angeordnet. Durch dieses Gegengefälle kann der Inhalt des Leichtflüssigkeitsabscheidraums bei einer Anlagenreinigung über den Wartungsschacht 14 abgesaugt werden.

Damit die aufgestiegene Leichtflüssigkeit die Leichtflüssigkeitsabscheidevorrichtung 10 nicht mit dem restlichen Abwasser durch den Ablauf 20 wieder verlassen, sondern darin zurückgehalten werden kann, ist das Leichtflüssigkeitsabscheiderohr 11 der erfindungsgemäßen Leichtflüssigkeitsabscheidevorrichtung 10 in zwei Räume unterteilt, nämlich in einen Strömungsraum 11 c und einen damit einstückig ausgebildeten Leichtflüssigkeitsabscheideraum 11 d, die über eine Mehrzahl von Durchtrittsöffnungen 11e miteinander in Verbindung stehen. Die Durchtrittsöffnungen 11e sind im Bereich der Decke 11f des Strömungsraums 11c angeordnet. Der Leichtflüssigkeitsabscheideraum 11d stellt dabei gegenüber dem Strömungsraum 11c strömungstechnisch einen Totraum dar, der an den Stirnseiten verschlossen ist und dadurch in Strömungsrichtung nicht angeströmt werden kann.

Die Leichtflüssigkeitsanteile, wie zum Beispiel Öl, Benzin oder dergleichen, die im Abwasser schweben, steigen aufgrund ihrer geringeren Dichte gegenüber dem restlichen Abwasser zur Decke 11f des Strömungsraums 11c auf, während das Abwasser das Leichtflüssigkeitsabscheiderohr 11 durchströmt. An der Decke 11f angelangt, treten die Leichtflüssigkeitströpfchen durch die Durchtrittsöffnungen 11e in den Leichtflüssigkeitssammelraum 11d ein. Darüber hinaus können sich auch sehr feine Leichtflüssigkeitspartikel an den Lamellen- bzw. Gitterstegen der Oberfläche der Decke 11f ansammeln. Durch den sogenannten Koaleszenzeffekt neigen die feinen Leichtflüssigkeitspartikel dazu, zusammenzufließen und größere Tropfen zu bilden. Diese können sich dann von der Decke 11f lösen, um ebenfalls durch die Durchtrittsöffnungen 11e hindurchzutreten. Innerhalb des Leichtflüssigkeitsabscheideraums 11d steigen die Leichtflüssigkeitstropfen weiter in vertikaler Richtung V auf und gelangen somit schließlich in einen Leichtflüssigkeitssammelbereich 11g des Leichtflüssigkeitsabscheideraums 11d. Dieser Leichtflüssigkeitssammelbereich 11g befindet sich am höchst gelegenen Abschnitt des Leichtflüssigkeitsabscheideraums 11d, das heißt in der Figur ganz rechts.

Mit dem Leichtflüssigkeitssammelbereich 11g verbunden ist ein Anschlusskanal 11 h, der hauptsächlich zur Entlüftung des Leichtflüssigkeitsabscheideraums 11d dient. Obgleich die Entfernung der Leichtflüssigkeit aus dem Leichtflüssigkeitssammelbereich 11g üblicherweise über den Wartungsschacht 14 zusammen mit dem restlichen, sich im Strömungsraum 11c und im Wartungsschacht 14 befindenden Abwasser erfolgt, ermöglicht der Anschlusskanal 11h grundsätzlich auch eine gesonderte Entsorgung nur der Leichtflüssigkeit aus dem Leichtflüssigkeitssammelbereich 11g.

Das obere Ende 26a der Überlaufwand 26 liegt notwendigerweise höher als ein am höchsten gelegener Durchtrittsabschnitt 11e' der Durchtrittsöffnungen 11e, vorzugsweise auf Höhe der Rohrsohle des Zulaufs 16. Das Abwasser muss über das obere Ende 26a der Überlaufwand 26 hinüberströmen, bevor das von der Leichtflüssigkeit weitgehend gereinigte Abwasser vom zweiten Wartungsschacht 18 über dessen Auslass 20 beispielsweise einer Rigolenanordnung zugeführt werden kann (Pfeil P₃), welche der Versickerung des Abwassers im Erdreich dient. Mittels der Überlaufwand 26 wird somit sichergestellt, dass, zumindest wenn Abwasser durch den Ablauf 20 strömt, der Abwasserpegel im Leichtflüssigkeitsabscheiderohr 11 stets so hoch ist, dass die abgeschiedene Leichtflüssigkeit im Leichtflüssigkeitssammelbereich 11g zurückgehalten werden kann und nicht mit dem restlichen Abwasser die Leichtflüssigkeitsabscheidevorrichtung 10 verlässt.

Nachzutragen ist noch, dass in dem Strömungsraum 11c der Auslassöffnung 11b benachbart, ein Koaleszenzeinsatz 28 angeordnet sein kann, der von im Wesentlichen dem gesamten Abwasser durchströmt wird. Mit Hilfe dieses Koaleszenzeinsatzes 28 kann die Reinigungswirkung des Koaleszenzeffekts effektiv genutzt werden. Ferner kann der Koaleszenzeinsatz 28 über den Wartungsschacht 18 herausnehmbar und auswechselbar sein. Obgleich dies nicht dargestellt ist, kann selbstverständlich auch eine Mehrzahl derartiger Koaleszenzeinsätze 28 vorgesehen sein, die über die Länge des Strömungsraums 11c verteilt angeordnet sind.

## Patentansprüche

1. Regenwasserbewirtschaftungsanlage mit einer Leichtflüssigkeitsabscheidevorrichtung (10) zum zumindest teilweisen Entfernen von Leichtflüssigkeit, beispielsweise Öl, Benzin oder dergleichen, aus Abwasser, wobei die Leichtflüssigkeitsabscheidevorrichtung (10) wenigstens ein Leichtflüssigkeitsabscheiderohr (11) umfasst, welches wenigstens einen Strömungsraum (11c) mit wenigstens einer Einlassöffnung (11a) und wenigstens einer Auslassöffnung (11b) aufweist,
wobei das Abwasser durch die wenigstens eine Einlassöffnung (11a) in den wenigstens einen Strömungsraum (11c) eintritt und nach Durchströmen des wenigstens einen Strömungsraums (11c) durch die wenigstens eine Auslassöffnung (11b) wieder aus dem wenigstens einen Strömungsraum (11c) austritt,
wobei zumindest ein Teil der Leichtflüssigkeit während des Durchströmens des wenigstens einen Strömungsraums (11c) bedingt durch die gegenüber dem restlichen Abwasser geringere spezifische Dichte der Leichtflüssigkeit nach oben aufsteigt, und
wobei der wenigstens eine Strömungsraum (11c) über wenigstens eine an seiner Decke (11f) vorgesehene Durchtrittsöffnung (11e) mit wenigstens einem Leichtflüssigkeitsabscheideraum (11d) verbunden ist, in welchem sich in dem wenigstens einen Strömungsraum (11c) aufsteigende und durch die wenigstens eine Durchtrittsöffnung (11e) hindurchtretende Leichtflüssigkeit abscheidet, wobei wenigstens ein Teil des Strömungsraums (11c) und wenigstens ein Teil des Leichtflüssigkeitsabscheideraums (11 d) einstückig ausgebildet sind, wobei die Leichtflüssigkeitsabscheidevorrichtung (10) von einem herkömmlichen Rohr gebildet ist, in welches eine den Strömungsraum (11 c) und den Leichtflüssigkeitsabscheideraum (11 d) voneinander trennende und die wenigstens eine Durchtrittsöffnung (11 e) aufweisende Wandung eingebracht ist, so dass die äußeren Begrenzungswandungen von Strömungsraum (11c) und Leichtflüssigkeitsabscheideraum (11 d) einstückig ausgebildet sind,
**dadurch gekennzeichnet, dass** das wenigstens eine Leichtflüssigkeitsabscheiderohr (11) bezogen auf die Strömungsrichtung (P₂) des Abwassers mit Gegengefälle angeordnet ist

2. Regenwasserbewirtschaftungsanlage nach Anspruch 1,
**dadurch gekennzeichnet, dass** das wenigstens eine Leichtflüssigkeitsabscheiderohr (11 d) im Wesentlichen gradlinig ausgebildet ist oder/und einen im Wesentlichen kreisförmigen Querschnitt aufweist.

3. Regenwasserbewirtschaftungsanlage nach einem der Ansprüche 1 oder 2,
**dadurch gekennzeichnet, dass** die Leichtflüssigkeitsabscheidevorrichtung (10) ferner eine Überlaufwand (26) umfasst.

4. Regenwasserbewirtschaftungsanlage nach einem der Ansprüche 1 bis 3,
**dadurch gekennzeichnet, dass** wenigstens ein Strömungsraum (11c) und wenigstens ein Leichtflüssigkeitsabscheideraum (11d) durch eine einzige Durchtrittsöffnung (11 e) miteinander verbunden sind, welche sich vorzugsweise über wenigstens 1%, bevorzugter über wenigstens 25%, noch bevorzugter über wenigstens 50%, der Länge des Strömungsraums (11c) erstreckt.

5. Regenwasserbewirtschaftungsanlage nach einem der Ansprüche 1 bis 3,
**dadurch gekennzeichnet, dass** wenigstens ein Strömungsraum (11c) und wenigstens ein Leichtflüssigkeitsabscheideraum (11d) durch eine Mehrzahl von, vorzugsweise in Strömungsrichtung (P₂) aufeinander folgend angeordneter Durchtrittsöffnungen (11 e) miteinander verbunden sind.

6. Regenwasserbewirtschaftungsanlage nach Anspruch 5,
**dadurch gekennzeichnet, dass** ein den Durchtrittsöffnungen (11e) benachbarter Abschnitt wenigstens eines Strömungsraums (11c) mit wenigstens einem Quersteg versehen ist, welcher bezüglich der Strömungsrichtung (P₂) beispielsweise im Wesentlichen orthogonal oder schräg angeordnet ist.

7. Regenwasserbewirtschaftungsanlage nach einem der Ansprüche 1 bis 6,
**dadurch gekennzeichnet, dass** der wenigstens eine Leichtflüssigkeitsabscheideraum (11d), vorzugsweise an seiner höchst gelegenen Stelle, mit einer Entlüftungsvorrichtung (11h) verbunden ist.

8. Regenwasserbewirtschaftungsanlage nach einem der Ansprüche 1 bis 7,
**dadurch gekennzeichnet, dass** der wenigstens eine Leichtflüssigkeitsabscheideraum (11d), vorzugsweise an seiner höchst gelegenen Stelle, mit einem Anschlusskanal (11h) zum Entfernen, beispielsweise durch Absaugen, der abgeschiedenen Leichtflüssigkeit aus dem Leichtflüssigkeitsabscheideraum (11d) verbunden ist.

9. Regenwasserbewirtschaftungsanlage nach einem der Ansprüche 1 bis 8,
**dadurch gekennzeichnet, dass** wenigstens ein Ende wenigstens eines Strömungsraums (11c) in einem im Wesentlichen vertikal verlaufenden Schacht (14, 18) endet.

10. Regenwasserbewirtschaftungsanlage nach einem der Ansprüche 1 bis 9,
**dadurch gekennzeichnet, dass** wenigstens ein Strömungsraum (11c) oder/und wenigstens ein Leichtflüssigkeitsabscheideraum (11d) aus Kunststoff gefertigt ist/sind.

11. Regenwasserbewirtschaftungsanlage nach einem der Ansprüche 1 bis 10,
**dadurch gekennzeichnet, dass** in dem Strömungsraum (11c), vorzugsweise der Auslassöffnung (11b) benachbart, wenigstens ein Koaleszenzeinsatz (28) angeordnet ist, der vorzugsweise von im Wesentlichen dem gesamten Abwasser durchströmt wird.

12. Regenwasserbewirtschaftungsanlage nach Anspruch 11,
**dadurch gekennzeichnet, dass** der wenigstens eine Koaleszenzeinsatz (28) über einen Wartungsschacht (18) herausnehmbar und auswechselbar ist.

## Claims

1. Rainwater management system comprising a light liquid separation device (10) for removing at least some light liquid, for example oil, petrol or the like, from wastewater, the light liquid separation device (10) comprising at least one light liquid separation pipe (11) which has at least one flow chamber (11 c) having at least one inlet opening (11a) and at least one outlet opening (11 b), the wastewater entering the at least one flow chamber (11 c) through the at least one inlet opening (11a), and the wastewater exiting the at least one flow chamber (11c) through the at least one outlet opening (11b) after flowing through the at least one flow chamber (11c), at least some of the light liquid rising upwards, during flowing through the at least one flow chamber (11c), as a result of the relatively low specific density of the light liquid compared with the remaining wastewater, and the at least one flow chamber (11c) being connected to at least one light liquid separation chamber (11 d) via at least one through-opening (11e) provided on the roof (11f) thereof, in which light liquid separation chamber light liquid, which rises upwards and passes through the at least one through-opening (11e), separates in the at least one flow chamber (11c), at least one part of the flow chamber (11c) and at least one part of the light liquid separation chamber (11d) being formed integrally, the light liquid separation device (10) being formed from a conventional pipe in which is inserted a wall which separates the flow chamber (11c) and the light liquid separation chamber (11 d) and has the at least one through-opening (11e), so that the outer limiting walls of the flow chamber (11c) and the light liquid separation chamber (11 d) are formed integrally, **characterised in that** the at least one light liquid separation pipe (11) is arranged with a counter-slope in relation to the flow direction (P2) of the wastewater.

2. Rainwater management system according to claim 1, **characterised in that** the at least one light liquid separation pipe (11d) is substantially straight and/or has a substantially circular cross section.

3. Rainwater management system according to either claim 1 or claim 2, **characterised in that** the light liquid separation device (10) further comprises an overflow wall (26)

4. Rainwater management system according to any of claims 1 to 3, **characterised in that** at least one flow chamber (11c) and at least one light liquid separation chamber (11d) are interconnected by a single through-opening (11 e) which preferably extends over at least 1 %, more preferably over at least 25 %, even more preferably over at least 50 % of the length of the flow chamber (11c).

5. Rainwater management system according to any of claims 1 to 3, **characterised in that** at least one flow chamber (11c) and at least one light liquid separation chamber (11 d) are interconnected by a plurality of through-openings (11e) which are preferably arranged in succession in the flow direction (P2).

6. Rainwater management system according to claim 5, **characterised in that** a portion, adjacent to the through-openings (11e), of at least one flow chamber (11c) is provided with a transverse bar, which is arranged substantially orthogonally or obliquely with respect to the flow direction (P2).

7. Rainwater management system according to any of claims 1 to 6, **characterised in that** the at least one light liquid separation chamber (11 d) is connected, preferably at its highest point, to a ventilation device (11 h).

8. Rainwater management system according to any of claims 1 to 7, **characterised in that** the at least one light liquid separation chamber (11d) is connected, preferably at its highest point, to a connection duct (11 h) for removing the separated light liquid from the light liquid separation chamber (11d), for example by suction.

9. Rainwater management system according to any of claims 1 to 8, **characterised in that** at least one end of at least one flow chamber (11 c) terminates in a substantially vertical shaft (14, 18).

10. Rainwater management system according to any of claims 1 to 9, **characterised in that** at least one flow chamber (11c) and/or at least one light liquid separation chamber (11d) is/are produced from plastics material.

11. Rainwater management system according to any of claims 1 to 10, **characterised in that** at least one coalescence insert (28) is arranged in the flow chamber (11 c), preferably adjacently to the outlet opening (11 b), substantially all the wastewater preferably flowing through said insert.

12. Rainwater management system according to claim 11, **characterised in that** the at least one coalescence insert (28) can be removed and replaced via a maintenance shaft (18).

## Revendications

1. Installation de valorisation d'eau de pluie avec un dispositif de séparation de liquides légers (10) pour l'élimination au moins partielle de liquide léger, par exemple d'huile, d'essence ou analogues, hors d'eaux usées, dans laquelle le dispositif de séparation de liquides légers (10) comprend au moins un tube de séparation de liquides légers (11), qui présente au moins une chambre d'écoulement (11c) avec au moins une ouverture d'entrée (11a) et au moins une ouverture de sortie (11b),
dans laquelle les eaux usées entrent dans ladite au moins une chambre d'écoulement (11c) par ladite au moins une ouverture d'entrée (11a) et, après avoir traversé ladite au moins une chambre d'écoulement (11c), sortent de nouveau de ladite au moins une chambre d'écoulement (11c) par ladite au moins une ouverture de sortie (11b),
dans laquelle au moins une partie du liquide léger se déplace vers le haut pendant la traversée de ladite au moins une chambre d'écoulement (11c) en raison de la densité spécifique plus faible du liquide léger par rapport au reste des eaux usées, et
dans laquelle ladite au moins une chambre d'écoulement (11c) est reliée par au moins une ouverture de passage (11e) prévue à son plafond (11f) à au moins une chambre de séparation de liquides légers (11d), dans laquelle le liquide léger se déplaçant vers le haut dans ladite au moins une chambre d'écoulement (11c) et passant à traversé ladite au moins une ouverture de passage (11e) se sépare, dans laquelle au moins une partie de ladite chambre d'écoulement (11c) et au moins une partie de ladite chambre de séparation de liquides légers (11d) sont réalisées d'une seule pièce, dans laquelle le dispositif de séparation de liquides légers (10) est formé par un tube conventionnel, dans lequel est installée une paroi séparant l'une de l'autre la chambre d'écoulement (11c) et la chambre de séparation de liquides légers (11d) et présentant ladite au moins une ouverture de passage (11e), de telle manière que les parois de limitation extérieures de la chambre d'écoulement (11c) et de la chambre de séparation de liquides légers (11d) soient réalisées en une seule pièce,
**caractérisé en ce que** ledit au moins un tube de séparation de liquides légers (11) est disposé avec une contre-pente par rapport à la direction d'écoulement (P2) des eaux usées.

2. Installation de valorisation d'eau de pluie selon la revendication 1, **caractérisée en ce que** ledit au moins un tube de séparation de liquides légers (11d) est réalisé sous forme essentiellement rectiligne et/ou présente une section transversale essentiellement circulaire.

3. Installation de valorisation d'eau de pluie selon la revendication 1 ou 2, **caractérisée en ce que** le dispositif de séparation de liquides légers (10) comprend en outre une paroi de trop-plein (26).

4. Installation de valorisation d'eau de pluie selon l'une quelconque des revendications 1 à 3, **caractérisée en ce qu'**au moins une chambre d'écoulement (11c) et au moins une chambre de séparation de liquides légers (11d) sont raccordées l'une à l'autre par une seule ouverture de passage (11e), qui s'étend de préférence sur au moins 1 %, de préférence sur au moins 25 %, et de préférence encore sur au moins 50 %, de la longueur de la chambre d'écoulement (11c).

5. Installation de valorisation d'eau de pluie selon l'une quelconque des revendications 1 à 3, **caractérisée en ce qu'**au moins une chambre d'écoulement (11c) et au moins une chambre de séparation de liquides légers (11d) sont raccordées l'une à l'autre par une multiplicité d'ouvertures de passage (11e) disposées de préférence à la suite l'une de l'autre dans la direction d'écoulement (P2).

6. Installation de valorisation d'eau de pluie selon la revendication 5, **caractérisée en ce qu'**une partie de ladite au moins une chambre d'écoulement (11c) proche des ouvertures de passage (11e) est munie d'au moins une nervure transversale, qui est disposée essentiellement perpendiculairement ou en oblique par rapport à la direction d'écoulement (P2).

7. Installation de valorisation d'eau de pluie selon l'une quelconque des revendications 1 à 6, **caractérisée en ce que** ladite au moins une chambre de séparation de liquides légers (11d) est raccordée à un dispositif d'aération (11h), de préférence à son point situé le plus haut.

8. Installation de valorisation d'eau de pluie selon l'une quelconque des revendications 1 à 7, **caractérisée en ce que** ladite au moins une chambre de séparation de liquides légers (11d) est raccordée à un canal de raccordement (11h), de préférence à son point situé le plus haut, pour l'élimination, par exemple par aspiration, du liquide léger séparé hors de la chambre de séparation de liquides légers (11d).

9. Installation de valorisation d'eau de pluie selon l'une quelconque des revendications 1 à 8, **caractérisée en ce qu'**au moins une extrémité d'au moins une chambre d'écoulement (11c) se termine dans un puits (14, 18) qui s'étend essentiellement verticalement.

10. Installation de valorisation d'eau de pluie selon l'une quelconque des revendications 1 à 9, **caractérisée en ce qu'**au moins une chambre d'écoulement (11c) et/ou au moins une chambre de séparation de liquides légers (11d) est/sont fabriquée(s) en matière plastique.

11. Installation de valorisation d'eau de pluie selon l'une quelconque des revendications 1 à 10, **caractérisée en ce qu'**au moins un insert de coalescence (28) est disposé dans la chambre d'écoulement (11c), de préférence à proximité de l'ouverture de sortie (11b), lequel est de préférence traversé par essentiellement la totalité des eaux usées.

12. Installation de valorisation d'eau de pluie selon la revendication 11, **caractérisée en ce que** ledit au moins un insert de coalescence (28) peut être retiré et remplacé via un puits d'entretien (18).
